# EUROPEAN PATENT APPLICATION

(11) **EP 4 835 983 A1**
(43) Date of publication of application: **04.11.2026**
(21) Application number: 24911803.5
(22) Date of filing: 02.04.2024
(51) Int. Cl.: H01M 4/133, H01M 4/587

(54) **NEGATIVE ELECTRODE MATERIAL FOR LITHIUM-ION SECONDARY BATTERY, NEGATIVE ELECTRODE FOR LITHIUM-ION SECONDARY BATTERY, LITHIUM-ION SECONDARY BATTERY, AND METHOD FOR PRODUCING NEGATIVE ELECTRODE MATERIAL FOR LITHIUM-ION SECONDARY BATTERY**

(30) Priority: 25.12.2023 WO PCT/JP2023/046456; 25.12.2023 WO PCT/JP2023/046457; 25.12.2023 WO PCT/JP2023/046458; 25.12.2023 WO PCT/JP2023/046459; 25.12.2023 WO PCT/JP2023/046460; 25.12.2023 WO PCT/JP2023/046461
(71) Applicant: Resonac Corporation, Tokyo 105-7325 (JP)
(72) Inventor: ONUMA, Hiroo, Tokyo 105-7325 (JP); HOSHI, Kento, Tokyo 105-7325 (JP); SAITO, Hiroki, Tokyo 105-7325 (JP); HOMBO, Hidetoshi, Tokyo 105-7325 (JP); UCHIYAMA, Yoshinori, Tokyo 105-7325 (JP); TONEGAWA, Akihisa, Tokyo 105-7325 (JP)
(74) Representative: Berggren Oy
(86) International application number: PCT/JP2024/013646
(87) International publication number: WO 2025/141904

(57) **Abstract**

There is provided a negative electrode material for a lithium-ion secondary battery, including a plurality of graphite particles, wherein, when an SEM image of a cross section of the graphite particles is binarized into void parts and regions other than the void parts, with the void parts set to 0, and the regions other than the voids set to 1, and a plurality of graphite particle images having 10,000 pixels or more are selected from the binarized images, in the selected graphite particle images, the average void content value is 0.700 to 0.940.

## Description

### [Technical Field]

The present disclosure relates to a negative electrode material for a lithium-ion secondary battery, a negative electrode for a lithium-ion secondary battery, a lithium-ion secondary battery, and a method for producing a negative electrode material for a lithium-ion secondary battery.

### [Background Art]

Taking advantage of their characteristics of small size, light weight and high energy density, lithium-ion secondary batteries have conventionally been widely used in electronic devices such as notebook personal computers (PCs), mobile phones, smartphones, and tablet PCs. In recent years, against the backdrop of environmental problems such as global warming caused by CO₂ emissions, the use of electric vehicles such as clean electric vehicles (EVs) that run solely on batteries, hybrid electric vehicles (HEVs) in which a gasoline engine and a battery are combined, and plug-in hybrid electric vehicles (PHEVs) has become widespread, and the development of lithium-ion secondary batteries (on-board lithium-ion secondary batteries) as batteries to be mounted in these devices is being advanced.

The input characteristics of lithium-ion secondary batteries are significantly influenced by the performance of the negative electrode material of the lithium-ion secondary batteries. Carbon materials are widely used as materials for the negative electrode materials for lithium-ion secondary batteries. For example, carbon materials with a high degree of crystallinity such as artificial graphite and spherical natural graphite obtained by spheroidizing scaly natural graphite have been proposed as materials for obtaining high-density negative electrodes.

Regarding artificial graphite, for example, PTL 1 discloses a negative electrode material for a lithium-ion secondary battery, containing composite particles including a plurality of flat graphite particles aggregated or bonded such that their orientation planes are non-parallel to each other, as well as spherical graphite particles.

### [Citation List]

### [Patent Literature]

[PTL 1] WO 2015/147012

### [Summary of Invention]

### [Technical Problem]

Due to the rapid growth of the EV market, there has been increasing demand for negative electrode materials for lithium-ion secondary batteries. In lithium-ion secondary batteries, when charging and discharging are repeated, the negative electrode expands, and the expansion of the negative electrode can easily cause peeling off of the negative electrode material and deterioration of cycle characteristics.

An object of the present disclosure is to provide a negative electrode material for a lithium-ion secondary battery that can be used to produce a lithium-ion secondary battery in which expansion of a negative electrode can be minimized during repeated charging and discharging, a negative electrode for a lithium-ion secondary battery containing the same, and a lithium-ion secondary battery.

An object of the present disclosure is to provide a method for producing a negative electrode material for a lithium-ion secondary battery that can be used to produce a lithium-ion secondary battery in which expansion of a negative electrode can be minimized during repeated charging and discharging.

### [Solution to Problem]

Means for achieving the above objects include the following aspects.
<1> A negative electrode material for a lithium-ion secondary battery, including a plurality of graphite particles, wherein, when an SEM image of a cross section of the graphite particles is binarized into void parts and regions other than the void parts, with the void parts set to 0, and the regions other than the voids set to 1, and a plurality of graphite particle images having 10,000 pixels or more are selected from the binarized images, in the selected graphite particle images, the average void content value is 0.700 to 0.940.
<2> The negative electrode material for a lithium-ion secondary battery according to <1>, wherein, when a plurality of graphite particle images having 10,000 pixels or more are selected from the binarized images, and in the selected graphite particle images, the number of pixels corresponding to the void parts and the number of pixels corresponding to regions other than the void parts are determined, the total number of pixels in the selected graphite particle images is 100,000 or more, and the average value of the numbers of pixels corresponding to the void parts contained in one graphite particle image is 1,000 to 20,000.
<3> The negative electrode material for a lithium-ion secondary battery according to <1> or <2>, wherein, when a plurality of graphite particle images having 10,000 pixels or more are selected from the binarized images, and in the selected graphite particle images, the number of pixels corresponding to the void parts and the number of pixels corresponding to regions other than the void parts are determined, the total number of pixels in the selected graphite particle images is 100,000 or more, and the average value of the proportions of the number of pixels corresponding to the void parts included in one graphite particle image with respect to the sum of the number of pixels corresponding to the void parts and the number of pixels corresponding to the regions other than the void parts included in the one graphite particle image is 0.030 to 0.300.
<4> The negative electrode material for a lithium-ion secondary battery according to any one of <1> to <3>, wherein, regarding the standard deviation and variance of hues of the graphite particles obtained from a birefringence image of the cross section of the graphite particles, when the total number of pixels in the birefringence image is 10,000 or more, the average value of the standard deviations of the hues of the graphite particles is 0.210 to 0.400, and the average value of the variances of the hues of the graphite particles is 0.0550 to 0.1000.
<5> The negative electrode material for a lithium-ion secondary battery according to any one of <1> to <4>, wherein the true density of the graphite particles is 2.20 g/cm³ or less.
<6> The negative electrode material for a lithium-ion secondary battery according to any one of <1> to <5>, wherein the graphite particles include artificial graphite particles, the artificial graphite particles are particles obtained by graphitizing a mixture containing a graphitizable aggregate and a graphitizable binder, and the binder contains a water-soluble or water-absorbent polymer compound.
<7> The negative electrode material for a lithium-ion secondary battery according to any one of <1> to <6>, wherein the circularity of the graphite particles is 91.0% or more.
<8> The negative electrode material for a lithium-ion secondary battery according to any one of <1> to <7>, wherein the oil absorption of the graphite particles is 35 mL/100 g or less.
<9> The negative electrode material for a lithium-ion secondary battery according to any one of <1> to <8>, wherein the degree of graphitization of the graphite particles is 93.5% or less.
<10> The negative electrode material for a lithium-ion secondary battery according to any one of <1> to <9>, wherein the compression load on the graphite particles is 2.50 kN/cm² or more.
<11> A negative electrode for a lithium-ion secondary battery, including a negative electrode material layer containing the negative electrode material for a lithium-ion secondary battery according to any one of <1> to <10> and a current collector.
<12> A lithium-ion secondary battery, including the negative electrode for a lithium-ion secondary battery according to <11>, a positive electrode, and an electrolytic solution.
<13> A method for producing a negative electrode material for a lithium-ion secondary battery for producing the negative electrode material for the lithium-ion secondary battery according to any one of <1> to <10>, including:
   (a) a step of obtaining a mixture containing a graphitizable aggregate and a graphitizable binder containing a water-soluble or water-absorbent polymer compound,
   (b) a step of molding the mixture to obtain a molded product,
   (c) a step of graphitizing the molded product to obtain a graphitized product, and
   (d) a step of crushing the graphitized product to obtain a crushed product.
<14> The method for producing the negative electrode material for a lithium-ion secondary battery according to <13>, further including a step of spheroidizing a graphitizable aggregate before the step (a).

### [Advantageous Effects of Invention]

The present disclosure can provide a negative electrode material for a lithium-ion secondary battery that can be used to produce a lithium-ion secondary battery in which expansion of a negative electrode can be minimized during repeated charging and discharging, a negative electrode for a lithium-ion secondary battery containing the same, and a lithium-ion secondary battery.

The present disclosure can provide a method for producing a negative electrode material for a lithium-ion secondary battery that can be used to produce a lithium-ion secondary battery in which expansion of a negative electrode can be minimized during repeated charging and discharging.

### [Description of Embodiments]

Hereinafter, forms for implementing the present invention will be described in detail. However, the present invention is not limited to the following embodiments. In the following embodiments, constituent elements (also including elemental steps and the like) are not essential unless otherwise specified. The same applies to numerical values and ranges thereof, and they do not limit the present invention.

In the present disclosure, the term "step" includes a step that is independent of other steps, and also includes a step whose purpose is achieved even if it cannot be clearly distinguished from other steps.

In the present disclosure, when a numerical range is indicated using "to," it means that numerical values stated before and after "to" are included as a minimum value and a maximum value.

In stepwise numerical ranges described in the present disclosure, an upper limit value or a lower limit value in one numerical range may be replaced with an upper limit value or a lower limit value of other described stepwise numerical ranges. In addition, in the numerical ranges described in the present disclosure, the upper limit value or the lower limit value of the numerical range may be replaced with values shown in Examples.

In the present disclosure, each component may contain a plurality of corresponding substances. When there are a plurality of types of substances corresponding to each component in the composition, a content percentage or content of each component means a total content percentage or content of the plurality of types of substances present in the composition unless otherwise noted.

In the present disclosure, a plurality of types of particles corresponding to each component may be included. When there are a plurality of types of particles corresponding to each component in the composition, the particle size of each component means a value for a mixture including the plurality of types of particles present in the composition unless otherwise specified.

In the present disclosure, the term "layer" or "film" includes, when a region in which the layer or film is present is observed, not only a case in which the layer or film is formed over the entire region, but also a case in which the layer or film is formed over only a part of the region.

In the present disclosure, the term "lamination" means stacking of layers, where two or more layers may be bonded to each other or two or more layers may be detachable.

In the present disclosure, the particle size distribution of the negative electrode material can be measured using a laser diffraction particle size distribution measurement device. The average particle size of particles is the particle size (D50) at a cumulative 50% from the smallest particle side in the volume-based particle size distribution. D90 is the particle size at a cumulative of 90% from the smallest particle side in the volume-based particle size distribution, and D10 is the particle size at a cumulative 10% from the smallest particle side in the volume-based particle size distribution.

### <<Negative Electrode Material for Lithium-ion Secondary Battery>>

A negative electrode material for a lithium-ion secondary battery of the present disclosure (hereinafter simply referred to as a negative electrode material) contains a plurality of graphite particles, and when an SEM image of a cross section of the graphite particles is binarized into void parts and regions other than the void parts, with the void parts set to 0, and the regions other than the voids set to 1, and a plurality of graphite particle images having 10,000 pixels or more are selected from the binarized images, in the selected graphite particle images, the average void content value is 0.700 to 0.940.

An SEM image of the cross section of the graphite particles is obtained and then the SEM image is binarized into void parts and regions other than the void parts (also referred to as a solid part). In this case, a threshold value is set so that the void parts are set to 0 (for example, black) and the solid parts are set to 1 (for example, white). From the binarized images, graphite particle images are extracted, the distribution of 0 (void parts) and 1 (solid parts) is obtained from the extracted graphite particle images, and the void content of the extracted graphite particles is determined. This void content refers to the average value of the 0/1 distributions when the distributions of 0 and 1 are determined for each pixel in one direction (for example, the X-axis direction in two dimensions) of the graphite particles. For a plurality of graphite particles (for example, a total of 8 graphite particles), the void content of the graphite particles is determined as described above, and the arithmetic mean value thereof is defined as the average void content value.

When the negative electrode material of the present disclosure is used, it is possible to produce a lithium-ion secondary battery in which expansion of a negative electrode can be minimized during repeated charging and discharging. The reason for this is speculated to be as follows.

The higher the average void content value in the negative electrode material, the smaller the proportion of closed voids (hollow structures, etc.) within the graphite particles, and the larger the proportion of the solid structure. Therefore, when the void content is 0.940 or less, an appropriate proportion of closed voids (hollow structures, etc.) is present within the graphite particles, and expansion of the negative electrode can be minimized during repeated charging and discharging.

In addition, such graphite particles can be easily obtained by spheroidizing a graphitizable aggregate before obtaining a mixture containing the graphitizable aggregate and a graphitizable binder, and graphitizing the mixture containing the spheroidized aggregate. The reason for this is that, by spheroidizing the aggregate in advance, closed voids (hollow structures, etc.) are easily formed within the graphite particles due to structural shrinkage caused by crystal growth within the spheroidized aggregate when the aggregate is graphitized.

When the SEM image of the cross section of the graphite particles is binarized into void parts and solid parts, and a plurality of graphite particle images having 10,000 pixels or more are selected (for example, 8 images are selected) from the binarized images, in the selected graphite particle images, when the number of pixels corresponding to the void part and the number of pixels corresponding to the solid part are determined, a total number of pixels in the selected graphite particle images is preferably 100,000 or more, and the average value of the numbers of pixels corresponding to the void parts included in one graphite particle image is preferably 1,000 to 20,000. When the average value of the numbers of pixels corresponding to the void parts is 1,000 or more, a more appropriate proportion of closed voids (hollow structures, etc.) is present within the graphite particles, and expansion of the negative electrode can be suitably minimized during repeated charging and discharging.

When the SEM image of the cross section of the graphite particles is binarized into void parts and solid parts, and a plurality of graphite particle images having 10,000 pixels or more are selected from the binarized images, in the selected graphite particle images, when the number of pixels corresponding to the void part and the number of pixels corresponding to the solid part are determined, a total number of pixels in the selected graphite particle images is preferably 100,000 or more, and the average value of the proportions of the number of pixels corresponding to the void parts included in one graphite particle image with respect to the sum of the number of pixels corresponding to the void parts and the number of pixels corresponding to the solid part included in one graphite particle image is preferably 0.030 to 0.300. When the average value, that is, (the number of pixels corresponding to the void parts/[the number of pixels corresponding to the void parts+the number of pixels corresponding to the solid parts], is 0.030 or more, a more appropriate proportion of closed voids (hollow structures, etc.) is present within the graphite particles, and expansion of the negative electrode can be suitably minimized during repeated charging and discharging.

Regarding the standard deviation and variance of hues of the graphite particles obtained from a birefringence image of the cross section of the graphite particles, the total number of pixels in the birefringence image is preferably 10,000 or more, the average value of the standard deviations of the hues of the graphite particles is preferably 0.210 to 0.400, and the average value of the variances of the hues of the graphite particles is preferably 0.0550 to 0.1000.

The standard deviation and variances of the hues of the graphite particles, as well as the average value thereof, can be determined by the method described in Examples.

In consideration of resistance to Li precipitation of lithium-ion secondary batteries, the graphite particles preferably contain artificial graphite particles. The artificial graphite particles are preferably particles obtained by graphitizing a mixture containing a graphitizable aggregate and a graphitizable binder. In consideration of resistance to Li precipitation of lithium-ion secondary batteries, the graphitizable binder preferably contains a water-soluble or water-absorbent polymer compound and more preferably contains an aqueous binder containing a water-soluble or water-absorbent polymer compound.

The water-soluble or water-absorbent polymer compound is not particularly limited, and may include, for example, at least one selected from the group consisting of starch, amylose, amylopectin, polyacrylic acid, carboxymethyl cellulose, polyvinyl alcohol and water-soluble proteins.

### (Average Particle Size)

The particle size of the graphite particles at a cumulative 50% from the smallest particle side in the volume-based particle size distribution measured by a laser diffraction method (hereinafter referred to as an "average particle size" or "D50") may be 10.0 µm to 30.0 µm.

In order to further improve resistance to Li precipitation, the average particle size of the graphite particles may be 28.0 µm or less or 25.0 µm or less.

The average particle size of the graphite particles may be 12.0 µm or more, 15.0 µm or more or 20.0 µm or more.

The average particle size of the graphite particles can be measured using a laser diffraction particle size distribution measurement device (for example, SALD3100, commercially available from Shimadzu Corporation).

Examples of methods for measuring the average particle size of the graphite particles contained in the negative electrode include a method for producing a sample electrode, embedding the electrode in an epoxy resin, then performing mirror-polishing, and observing a cross section of the electrode under a scanning electron microscope (for example, "VE-7800" commercially available from Keyence Corporation) and a method for producing a cross section of an electrode using an ion milling device (for example, "E-3500" commercially available from Hitachi High-Tech Corporation) and performing measurement under a scanning electron microscope (for example, "VE-7800" commercially available from Keyence Corporation). In this case, the average particle size is the median value of the particle sizes of 100 arbitrarily selected particles.

### (D10)

The D10 of the graphite particles may be 1.0 µm to 20.0 µm, 3.0 µm to 18.0 µm, 5.0 µm to 17.0 µm, or 7.0 µm to 17.0 µm.

The D10 of the graphite particles can be measured by a laser diffraction particle size distribution measurement device (for example, SALD3100, commercially available from Shimadzu Corporation).

### (Particle Size Distribution D90/D10)

The particle size distribution D90/D10 of the graphite particle is not particularly limited, and may be 2.0 to 5.0 or 2.0 to 4.0.

The particle size distribution D90/D10 can be measured by a laser diffraction particle size distribution measurement device (for example, SALD3100, commercially available from Shimadzu Corporation).

Examples of methods for measuring the particle size distribution D90/D10 of the graphite particles contained in the negative electrode include a method for producing a sample electrode, embedding the electrode in an epoxy resin, then performing mirror-polishing, and observing a cross section of the electrode under a scanning electron microscope (for example, "VE-7800" commercially available from Keyence Corporation) and a method for producing a cross section of an electrode using an ion milling device (for example, "E-3500" commercially available from Hitachi High-Tech Corporation) and performing measurement under a scanning electron microscope (for example, "VE-7800" commercially available from Keyence Corporation). In this case, the particle size distribution D90/D10 can be determined by the following method.
(a) Using a binarization method or the like, a projected area Sn of particles (n is the unique particle number assigned to the selected particles) is determined.
(b) Assuming that the particles are ideal and perfect spheres, the equivalent circle diameter Ln=√Sn/π is determined from the area Sn.
(c) The sphere volume Vn=(4/3)π(Ln)³ is determined from the equivalent circle diameter Ln.
(d) (a) to (c) are repeated for 100 selected particles.
(e) A distribution curve is plotted with the cumulative volume percentage of the 100 particles on the vertical axis and the particle size on the horizontal axis, and when the particle size at the point where the curve intersects the 10% horizontal axis is defined as the 10% diameter (D10), and the particle size at the point where the curve intersects the 90% horizontal axis is defined as the 90% diameter (D90), D90/D10 can be determined.

### (I₀₀₂/I₁₁₀)

When a negative electrode is formed using the negative electrode material of the present disclosure, in consideration of input characteristics of lithium-ion secondary batteries, I₀₀₂/I₁₁₀ (also referred to as an electrode orientation), which is a ratio of the peak intensity (I₀₀₂) of the 002 diffraction line to the peak intensity (I₁₁₀) of the 110 diffraction line obtained when the negative electrode pressed at 0.8 t/cm is subjected to X-ray diffraction measurement using CuKα radiation, may be 1,100 or less, 1,000 or less, 500 or less, or 400 or less.

The lower limit of I₀₀₂/I₁₁₀ is not particularly limited, and may be 200 or more.

I₀₀₂/I₁₁₀ can be determined by the method described in Examples. When I₀₀₂/I₁₁₀ is measured, components other than graphite particles and their proportions, which are conditions for producing the negative electrode, and negative electrode production conditions are the same as production conditions described in the electrode orientation measurement method in Examples.

### (Compression Load)

In order to suitably minimize deformation of the graphite particles and the like due to pressing during negative electrode production and achieve excellent input/output characteristics, the compression load on the graphite particles is preferably 2.25 kN/cm² or more, preferably 2.50 kN/cm² or more, more preferably 2.75 kN/cm² or more, and still more preferably 3.00 kN/cm² or more.

In order to minimize deformation of the current collector, peeling off of the current collector from the active material and the like due to pressing during negative electrode production, the compression load on the graphite particles may be 6.00 kN/cm² or less or 5.00 kN/cm² or less.

In the present disclosure, the compression load on the graphite particles can be determined as follows. A mold is filled with a predetermined mass (for example, 3.0 g) of graphite particles and compressed at a constant speed (for example, 10 mm/min), and the pressure (kN/cm²) at which the density of the compressed graphite particles reaches 1.7 g/cm³ is defined as the compression load on the graphite particles.

In the above measurement, for example, a mold with a diameter of 15 mm is used, and compression is performed using an autograph (for example, commercially available from Shimadzu Corporation). The density of the graphite particles is calculated from the volume of the graphite particles, which is determined based on the bottom area (for example, 1.767 cm²) of the mold and the distance from the bottom surface of the mold to the pressing surface of the graphite particle, and from the mass of the graphite particles.

A larger compression load on the graphite particles means that the graphite particles are less likely to undergo deformation, destruction or the like under pressure.

### (Springback Percentage)

The springback percentage of the graphite particles is not particularly limited. For example, in order to easily achieve a high density due to pressing during negative electrode production, the springback percentage may be 25% or less or 23% or less.

In order to further minimize destruction of the graphite particles and the like due to pressing during negative electrode production, the springback percentage of the graphite particles may be 15% or more or 17% or more.

In the present disclosure, the springback percentage of the graphite particles refers to the degree to which the density decreases when the pressure is released after the graphite particles have been compressed to a reference density. A higher springback percentage means that the graphite particles deformed by compression are more likely to return to their original state.

Specifically, a mold is filled with a predetermined mass (for example, 3.0 g) of the graphite particles and compressed at a constant speed (for example, 10 mm/min) until the density of the graphite particles reaches a reference density (for example, 1.7 g/cm³). Then, the pressure is released, and the density after pressure release is measured when the pressing surface stops moving due to elasticity. The springback percentage is determined from the obtained value according to the following formula. 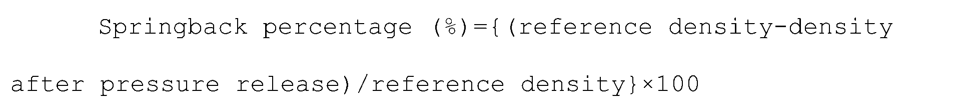 Springback percentage (%)={(reference density-density after pressure release)/reference density}×100

In the above measurement, for example, a mold with a diameter of 15 mm is used, and compression is performed using an autograph (for example, commercially available from Shimadzu Corporation). The density of the graphite particles is calculated from the volume of the graphite particles, which is determined based on the bottom area (for example, 1.767 cm²) of the mold and the distance from the bottom surface of the mold to the pressing surface of the graphite particle, and from the mass of the graphite particles.

The compression load on the graphite particles and the springback percentage of the graphite particles can be adjusted by changing the physical properties, composition or the like of graphite particle raw materials (for example, needle coke) or by changing graphitization conditions or the like.

### (0-Tap Density)

In order to easily improve the input/output characteristics and compression load of lithium-ion secondary batteries, the 0-tap density of the graphite particles is preferably 0.65 g/cm³ to 0.80 g/cm³ and more preferably 0.65 g/cm³ to 0.75 g/cm³.

When 100 cm³ of graphite particle sample powder is put into a graduated, flat-bottomed test tube with a capacity of 150 cm³ (for example, KRS-406, commercially available from Kuramochi Scientific Instruments Co., Ltd.), the 0-tap density of the graphite particles is the density value determined from the mass and volume of the sample powder before dropping the capped graduated, flat-bottomed test tube.

### (30-Tap Density)

In order to easily improve the input/output characteristics and compression load of lithium-ion secondary batteries, the 30-tap density of the graphite particles is preferably 0.86 g/cm³ to 1.10 g/cm³ and more preferably 0.87 g/cm³ to 1.05 g/cm³.

The 30-tap density of the graphite particles is the density value determined from the mass and volume of the sample powder after 100 cm³ of graphite particle sample powder is put into a graduated, flat-bottomed test tube with a capacity of 150 cm³ (for example, KRS-406, commercially available from Kuramochi Scientific Instruments Co., Ltd.), the graduated, flat-bottomed test tube is capped and the graduated, flat-bottomed test tube is then dropped 30 times from a height of 5 cm.

### (250-Tap Density)

In order to easily improve the input/output characteristics and energy density of lithium-ion secondary batteries, the 250-tap density of the graphite particles is preferably 1.05 g/cm³ to 1.25 g/cm³ and more preferably 1.10 g/cm³ to 1.25 g/cm³.

The 250-tap density of the graphite particles is the density value determined from the mass and volume of the sample powder after 100 cm³ of graphite particle sample powder is put into a graduated, flat-bottomed test tube with a capacity of 150 cm³ (for example, KRS-406, commercially available from Kuramochi Scientific Instruments Co., Ltd.), the graduated, flat-bottomed test tube is capped and the graduated, flat-bottomed test tube is then dropped 250 times from a height of 5 cm.

### (Compression Rate)

The compression rate of graphite particles represented by the following Formula (X) may be 0.30 to 0.50, 0.32 to 0.48, or 0.35 to 0.45. 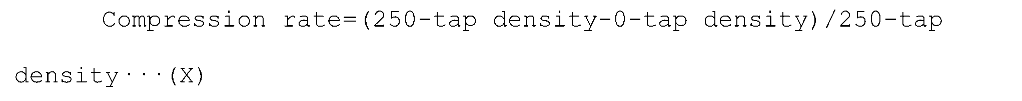 Compression rate=(250-tap density-0-tap density)/250-tap density· (X)

### (Specific Surface Area)

The specific surface area of the graphite particles determined by nitrogen adsorption measurement at 77K is not particularly limited. For example, in order to improve rapid charging and discharging performance and inhibit decomposition of the electrolytic solution, the specific surface area of the graphite particles is preferably 0.2 m²/g to 6.0 m²/g, more preferably 1.0 m²/g to 5.0 m²/g, and still more preferably 1.5 m²/g to 4.0 m²/g.

The specific surface area determined by nitrogen adsorption measurement at 77K can be determined from the adsorption isotherm obtained by nitrogen adsorption measurement at 77K using a BET method. Specifically, the specific surface area can be determined by the method described in Examples.

The specific surface area of the graphite particles can be adjusted by the particle size distribution, the particle structure and the like.

The specific surface area of the graphite particles may be adjusted by coating graphite particles with low-crystalline carbon or the like, and when an aqueous binder is used as the graphitizable binder, the specific surface area may be adjusted by the amount of the aqueous binder. When it is desired to reduce the particle size, the specific surface area significantly increases due to irregularities generated by crushing. However, by performing coating, the irregularities are filled with a coating material to make the surface smooth, and thereby the specific surface area can be adjusted.

### (Circularity)

In consideration of resistance to Li precipitation of lithium-ion secondary batteries, the circularity of the graphite particles may be 90.0% or more, 90.5% or more, or 91.0% or more.

The circularity of the graphite particles may be 95.0% or less or 93.0% or less.

In the present disclosure, the circularity can be measured using a wet-flow type particle size and shape analyzing device, and the circularity at a cumulative 50% on a number basis (so-called average circularity) may be used as the circularity.

### (Oil Absorption)

The oil absorption of the graphite particles is preferably 40 mL/100 g or less, more preferably 35 mL/100 g or less, and still more preferably 32 mL/100 g or less.

The lower limit of the oil absorption of the graphite particles is not particularly limited, and may be, for example, 20 mL/100 g or more or 25 mL/100 g or more.

The oil absorption of the graphite particles is an index of the amount of pores present inside and on the surface of the particles and voids between the particles.

When the oil absorption of the graphite particles is 40 mL/100 g or less, it is thought that the amount of pores present inside particles and on the surface of particles is small and the contact area with the electrolytic solution is sufficiently small. In addition, since the interfacial area is small, it is possible to reduce the amount of the binder when a negative electrode is produced, and thereby it tends to be possible to reduce the electric resistance and improve battery performance. In addition, since there are few pores, it is possible to reduce the amount of the solvent when the electrode is dried, which offers advantages in terms of production line costs and environments such as minimizing of facilities and power required for drying.

When the oil absorption of the graphite particles is 20 mL/100 g or more, it tends to be possible to minimize an increase in viscosity of the slurry when kneaded with a binder or the like, which occurs when there are too few voids between the particles. In addition, the binder tends to spread more easily, making kneading easier. In addition, it is easier to secure voids between the particles for the movement of lithium ions.

In the present disclosure, the oil absorption of the graphite particles is measured according to the method described in JIS K 6217-4:2017 "Carbon black for rubber-Fundamental characteristics-Part 4:Method of determining oil absorption number" using, as a reagent liquid, linseed oil (for example, commercially available from Kanto Chemical Co., Inc.) in place of dibutyl phthalate (DBP).

Specifically, linseed oil is titrated into target powder using a constant speed burette, and the change in viscosity characteristics is measured using a torque detector. The amount of linseed oil added per unit mass of the target powder that corresponds to 70% of the generated maximum torque is defined as the oil absorption (mL/100 g). As the measuring instrument, for example, an absorption measurement device (product name: S-500, commercially available from AsahiSouken Corporation) can be used.

### (True Density)

In order to minimize expansion of the negative electrode during repeated charging and discharging, the true density of the graphite particles is preferably 2.20 g/cm³ or less, more preferably 2.15 g/cm³ or less, and still more preferably 2.10 g/cm³ or less.

The true density of the graphite particles may be 1.90 g/cm³ or more or 2.00 g/cm³ or more.

The true density of the graphite particles can be determined by a gas substitution method (gas pycnometer) using helium gas.

The theoretical value of the true density of graphite is 2.26 g/cm³, and the closer it is to this theoretical value, the fewer pores are present inside and on the surface of the graphite particles, and the fewer voids there are inside the graphite particles. Therefore, the smaller the true density of the graphite particles, the farther it deviates from this theoretical value, and the more voids the particles tend to have inside. It is speculated that, when there are many voids inside the particles, expansion of the negative electrode during repeated charging and discharging can be minimized.

### (Degree of Graphitization)

In consideration of the discharging capacity when a lithium-ion secondary battery is produced, the degree of graphitization of the graphite particles is preferably 90.0% or more, more preferably 90.5% or more, still more preferably 91.0% or more, and particularly preferably 92.0% or more.

The upper limit of the degree of graphitization of the graphite particles is not particularly limited, and may be 100% or less, and in consideration of cycle characteristics when a lithium-ion secondary battery is produced, the upper limit is preferably 95.0% or less, more preferably 94.0% or less, and still more preferably 93.5% or less.

The graphite particles may or may not be subjected to a treatment for coating the surface with low-crystalline carbon.

When the graphite particles are subjected to a treatment for coating the surface with low-crystalline carbon, charging characteristics at low temperatures tend to be further improved when a lithium-ion secondary battery is constituted.

On the other hand, when the graphite particles are not subjected to a treatment for coating the surface with low-crystalline carbon, cracks, peeling and the like occur in the graphite particles due to pressing during electrode production, but it tends to be possible to minimize deterioration in storage characteristics due to increased decomposition activity of the electrolytic solution. In addition, this provides an advantage of expanding the degrees of freedom in production conditions. In addition, in the negative electrode material of the present disclosure, even if low-crystalline carbon is not present on the surface, it is possible to minimize deposition of lithium metal during charging.

When the graphite particles are artificial graphite particles graphitized using a graphitizable binder containing the above aqueous binder (for example, an aqueous binder containing a compound not including an aromatic ring, such as starch), the compound not including an aromatic ring such as starch is less likely to be converted into a graphite material. Therefore, the surface crystallinity of the graphite particles tends to be low and even if the treatment for coating the surface of the graphite particles with low-crystalline carbon is omitted, favorable charging characteristics at low temperatures tend to be obtained. Accordingly, when artificial graphite particles are produced using the above aqueous binder, it is possible to achieve both step simplification and improved charging characteristics.

The R value of the graphite particles may be 0.10 to 0.40 or 0.15 to 0.30. Particularly, the treatment for coating the surface with low-crystalline carbon is not performed, and the R value is preferably 0.10 to 0.40 and more preferably 0.15 to 0.30.

The R value is the intensity ratio Id/Ig of the maximum peak intensity Id in the range of 1,300 cm⁻¹ to 1,400 cm⁻¹ to the maximum peak intensity Ig in the range of 1,580 cm⁻¹ to 1,620 cm⁻¹ in the Raman spectroscopy spectrum obtained by Raman spectroscopic measurement.

In Raman spectroscopic measurement, the peak intensity Ig in the range of 1,580 cm⁻¹ to 1,620 cm⁻¹ is identified as a peak corresponding to a graphite crystal structure, for example, a peak appearing around 1,580 cm⁻¹.

The peak intensity Id in the range of 1,300 cm⁻¹ to 1,400 cm⁻¹ is identified as a peak corresponding to an amorphous carbon structure, for example, a peak appearing around 1,360 cm⁻¹.

The R value of the graphite particles may be determined by measuring the Raman spectrum using a Raman spectrum measurement device (for example, XploRA PLUS, commercially available from HORIBA, Ltd.) under the following conditions. In this case, the measured arithmetic mean value of 400 particles is defined as the R value.

### -Raman Spectrum Measurement Conditions-

·laser wavelength: 532 nm
·laser intensity: 100 mW or more
·neutral density filter: 1%
·radiation intensity: 1 mW
·measurement range: 1,000 cm⁻¹ to 1,800 cm⁻¹
·radiation time: 30 seconds
·radiation area: 1 µm²
·baseline (D band): 1,100 cm⁻¹ to 1,470 cm⁻¹
·baseline (G band): 1,450 cm⁻¹ to 1,710 cm⁻¹
·accumulated number of times for one particle: 2
·number of particles measured: 400 particles

In the present disclosure, a carbon material having an average interplanar spacing (d₀₀₂) of less than 3.40Å determined by an X-ray diffraction method is defined as graphite.

In the present disclosure, as will be described below, particles in which low-crystalline carbon is present on at least a part of the surface of graphite particles are also referred to as "graphite particles."

The theoretical value of the average interplanar spacing (d₀₀₂) of graphite crystals is 3.354Å, and the closer it is to this value, the further the graphitization has progressed.

In consideration of the initial charging and discharging efficiency and energy density of lithium-ion secondary batteries, the average interplanar spacing (d₀₀₂) is preferably 3.361Å or less, more preferably 3.3605Å or less, and still more preferably 3.360Å or less.

In order to achieve excellent input/output characteristics and excellent adhesion between a negative electrode and a current collector in a lithium-ion secondary battery, the average interplanar spacing (d₀₀₂) is preferably 3.358Å or more, more preferably 3.359Å or more, and still more preferably 3.3595Å or more.

In view of this, the average interplanar spacing (d₀₀₂) of the graphite particles is preferably 3.358Å to 3.361Å, more preferably 3.359Å to 3.3605Å, and still more preferably 3.3595Å to 3.360Å.

The average interplanar spacing (d₀₀₂) of the graphite particles can be calculated using the Bragg's equation based on the diffraction peak corresponding to the (002) plane of carbon, which appears at a diffraction angle 2 θ of around 24° to 27°, in a diffraction profile obtained by measuring diffraction lines with a goniometer when X-rays (CuKα radiation) are emitted to a sample. The average interplanar spacing (d₀₀₂) can be measured under the following conditions.
radiation source: CuKα radiation (wavelength=0.15418 nm)
output: 40 kV, 20 mA
sampling interval: 0.010°
scanning range: 10° to 35°
scan speed: 0.5°/min
Bragg's equation: $2 dsin θ = n λ ;$

Here, d is the length of one period, θ is the diffraction angle, n is the order of reflection, and λ is the X-ray wavelength.

The crystallite size Lc of the graphite particles may be 30 nm to 140 nm, 35 nm to 100 nm, or 40 nm to 80 nm.

In order to easily produce a lithium-ion secondary battery having excellent input/output characteristics and excellent adhesion between a negative electrode and a current collector, the crystallite size Lc of the graphite particles is preferably 100 nm or less.

### <<Method for Producing Negative Electrode Material for Lithium-ion Secondary Battery>>

A method for producing a negative electrode material for a lithium-ion secondary battery for producing the negative electrode material for a lithium-ion secondary battery of the present disclosure includes a step of graphitizing coke. More specifically, in order to, for example, improve handling properties in the graphitization treatment and the like and improve cycle characteristics of a lithium-ion secondary battery, the method for producing a negative electrode material for a lithium-ion secondary battery of the present disclosure preferably includes the following steps (a) to (d).
(a) a step of obtaining a mixture containing a graphitizable aggregate (coke) and a graphitizable binder,
(b) a step of molding the mixture to obtain a molded product,
(c) a step of graphitizing the molded product to obtain a graphitized product, and
(d) a step of crushing the graphitized product to obtain a crushed product.

Here, the steps of the method may be performed continuously or non-continuously. The steps of the method may be performed at the same location or at different locations.

The type of coke used in the production method is not particularly limited, and examples thereof include petroleum-based or coal-based cokes such as fluid coke, needle coke, mosaic coke, and semi-needle coke, which has properties intermediate between needle coke and mosaic coke.

The method for obtaining particles of coke (coke particle) is not particularly limited, and known methods can be used. The particle size of the coke particles is not particularly limited, and can be selected in consideration of a desired particle size of the graphite particles, the particle structure and the like. In order to obtain particles with a smaller specific surface area, it is preferable to crush the particles in the form of raw coke. Such particles tend to have fewer voids and cracks due to cleavage, and the compression load on the graphite particles tends to increase.

In the production method of the present disclosure, a mixture containing a graphitizable aggregate and a graphitizable binder is obtained, and the mixture is then molded to obtain a molded product. In the production method of the present disclosure, in consideration of resistance to Li precipitation of lithium-ion secondary batteries, the graphitizable binder preferably contains a water-soluble or water-absorbent polymer compound and more preferably contains an aqueous binder containing a water-soluble or water-absorbent polymer compound.

When the above aqueous binder is used, the strength of the molded product is improved, and thus handling properties in the subsequent graphitization treatment and the like are also improved. When the strength of the molded product is improved, the graphitized product obtained after the molded product is graphitized generally tends to be less likely to be crushed. However, in the production method, when the above aqueous binder is used, the strength of the molded product is improved and the graphitized product can be easily crushed.

In the production method, the reason why the strength of the molded product is improved and the graphitized product can be easily crushed is speculated to be as follows. Here, the present disclosure is not limited to the following speculation.

In the production method, when an aqueous binder containing a water-soluble or water-absorbent polymer compound is used, the aggregate is incorporated into the binder that has swelled in water. Therefore, during molding of the mixture, the surface of the graphitizable aggregate becomes slippery, the arrangement of the mixture is facilitated and the number of voids decreases. As a result, the density and strength of the molded product tend to be improved. In addition, water that is not incorporated into the binder fills the gaps between aggregates, which causes liquid crosslinking, and thus the strength of the molded product is improved.

In the production method, the molded product is subjected to a heat treatment by heating as necessary, and the molded product is then graphitized to obtain a graphitized product. When an aqueous binder is used, water evaporates during the heat treatment, graphitization or the like. Therefore, the molded product has a high density before the heat treatment, graphitization or the like is performed, but the density of the graphitized product decreases after graphitization. Therefore, the graphitized product can be easily crushed.

In addition, in the production method, the graphitized product can be easily crushed, and as a result, it is easier to obtain a crushed product with a small specific surface area. When a negative electrode material containing a crushed product with a small specific surface area is used to produce a lithium-ion secondary battery, the contact area of the negative electrode material with the electrolytic solution can be reduced. Accordingly, the decomposition reaction of the electrolytic solution is minimized, the lifespan of the battery can be prolonged, and as a result, the lithium-ion secondary battery tends to have excellent cycle characteristics.

Conventionally, when raw coke is used, it has problems such as difficulty in molding and low strength of the molded product, and it is necessary to improve moldability, the strength of the molded product and the like by performing a heat treatment on the raw coke. On the other hand, in the production method, even when raw coke is used without heat treatment, a molded product having excellent moldability and high strength is obtained. Therefore, as a graphitizable aggregate, heated raw coke may be used to form a molded product or non-heated raw coke may be used to form a molded product.

In the production method, because the molded product has excellent strength, it is not necessary to pack the mixture into a graphitization crucible or the like for graphitization. That is, it is not necessary to use a graphitization crucible or the like, and graphitization can be performed by simply placing the molded product in a graphitization furnace. Therefore, compared to using a graphitization crucible or the like, the production efficiency of the negative electrode material for a lithium-ion secondary battery tends to become excellent.

Generally, the strength of the molded product can be increased by increasing the amount of the graphitizable binder. However, when the amount of the graphitizable binder is excessive, the density of the graphitized product increases, the graphitized product tends to be less likely to be crushed, and battery characteristics such as initial charging and discharging efficiency of the negative electrode material tend to deteriorate. In the present embodiment, it is possible to increase the strength of the molded product without increasing the amount of the graphitizable binder, and it is also possible to prevent deterioration in battery characteristics due to an excessive amount of the binder used. In addition, by reducing the amount of the binder, it is easier to apply a hard carbon-derived coating to the surface of the crushed product, and input characteristics of the lithium-ion secondary battery tend to be improved.

In the step (a), a mixture containing a graphitizable aggregate and a graphitizable binder is obtained. The mixing may be performed at a temperature at which the graphitizable binder softens. Specifically, when the graphitizable binder is pitch, tar or the like, the temperature may be 50°C to 300°C, and when the thermosetting resin is used, the temperature may be 20°C to 100°C. Here, when the graphitizable binder is an aqueous binder containing a water-soluble or water-absorbent polymer compound, the mixing may be performed at room temperature or under heating.

The mixing method is not particularly limited. For example, mixing methods using a planetary mixer, a kiln mixer, a huddle stirrer and the like are preferable. A kneader that performs kneading, which is called a kneading machine, may be used.

When the graphitizable aggregate is in the form of particles, the average particle size (D50) of the graphitizable aggregate is, for example, preferably 10 µm to 30 µm, more preferably 12 µm to 28 µm, and still more preferably 15 µm to 25 µm.

The standard deviation of the particle size distribution of the graphitizable aggregate is, for example, preferably 0.35 or less, more preferably 0.20 or less, still more preferably 0.18 or less, and particularly preferably 0.16 or less. When the standard deviation of the particle size distribution of the aggregate is 0.35 or less, it is possible to reduce variation in the particle size of the aggregate and it is possible to minimize the variation in the particle size of the obtained crushed product. When a negative electrode material containing a crushed product with a small particle size variation is used to produce a lithium-ion secondary battery, the resistance distribution in the negative electrode can be made uniform. As a result, the rapid charging performance of the lithium-ion secondary battery tends to be improved. In addition, when the variation in the particle size of the aggregate is reduced, even if the content percentage or content of the graphitizable binder is reduced, the function of the binder can be suitably secured. The standard deviation of the particle size distribution is, for example, a value (volume basis) measured by a laser diffraction method. The lower limit of the standard deviation of the particle size distribution of the graphitizable aggregate is not particularly limited, and may be, for example, 0.05 or more or 0.10 or more.

Examples of methods for adjusting the average particle size of the graphitizable aggregate and the standard deviation of the particle size distribution of the graphitizable aggregate to be within the above ranges include classification by a sieve, wind force classification, and wet classification.

The graphitizable aggregate may be spheroidized before obtaining the mixture containing the graphitizable aggregate and the graphitizable binder. The spheronization treatment time may be 5 minutes to 2 hours or 10 minutes to 1 hour.

The circularity of the graphitizable aggregate may be 90.0% or more or 90.5% or more in order to easily obtain graphite particles with high circularity.

The circularity of the graphite particles may be 97.0% or less or 96.0% or less.

The graphitizable binder is not particularly limited as long as it is graphitized by a graphitization treatment. Specific examples thereof include the above aqueous binder, coal-based, petroleum-based, and artificial pitch and tar, thermoplastic resins, and thermosetting resins.

The graphitizable aggregate and the graphitizable binder contained in the mixture may be of only one type or of two or more types.

The content of each material in the mixture is not particularly limited. For example, the content of the graphitizable binder with respect to 100 parts by mass of the graphitizable aggregates may be 10 parts by mass to 30 parts by mass, 12 parts by mass to 25 parts by mass, or 14 parts by mass to 20 parts by mass. When the binder is added to a solvent or a dispersion medium and used in the form of a solution or dispersion solution, the parts by mass of the solvent or dispersion medium are excluded. When the content of the binder is 10 parts by mass or more, it tends to suitably function as a binder for the graphitizable aggregate. When the content of the binder is 30 parts by mass or less, the fixed carbon content in the mixture is sufficiently secured, and the yield tends to be excellent.

The graphitizable aggregate and the graphitizable binder contained in the mixture may be of only one type or of two or more types.

The mixture may contain components other than the graphitizable aggregate and the graphitizable binder. Examples of other components include an aromatic compound, graphite, a dispersing agent, and a graphitization catalyst.

The aromatic compound is not particularly limited as long as it is a compound having an aromatic ring. The aromatic compound may be a compound having an aromatic ring and a molecular weight of 500 or less or a compound having an aromatic ring and a molecular weight of 300 or less.

Examples of aromatic compounds include naphthalene, methylnaphthalenes such as 1-methylnaphthalene and 2-methylnaphthalene, acenaphthene, biphenyl, fluorene, benzopyrene, benzanthracene, dibenzanthracene, diphenylene oxide, quinoline, and isoquinoline.

The aromatic compounds contained in the mixture may be of only one type or of two or more types.

Among these, methylnaphthalene and naphthalene are preferable as the aromatic compound in consideration of moldability when a molded product is formed.

When the mixture contains an aromatic compound, the amount thereof is not particularly limited. The content percentage of the aromatic compound in the mixture with respect to a total amount of the mixture is preferably 1 mass% or less, more preferably 0.5 mass% or less, and still more preferably 0 mass%.

The mixture may contain graphite. Examples of graphite include natural graphite and artificial graphite. The graphite is preferably in the form of particles. The mixture may contain only one type of graphite or two or more types thereof.

In the step (b) to be described below, in order to facilitate dispersion of components in the mixture, the mixture preferably contains a dispersing agent. When the mixture contains a dispersing agent, it is possible to reduce the variation in the particle size of the crushed product obtained by crushing the graphitized product and it is easier to obtain a crushed product with a uniform particle size. As a result, the rapid charging performance of the lithium-ion secondary battery tends to be improved.

In addition, when the mixture contains a dispersing agent, the amount of the graphitizable binder can be reduced and improvement in battery characteristics such as initial charging and discharging efficiency of the negative electrode material can be expected.

The type of the dispersing agent is not particularly limited. Specific examples thereof include hydrocarbons such as liquid paraffin, paraffin wax, and polyethylene wax, fatty acids such as stearic acid, oleic acid, erucic acid, and 12-hydroxystearic acid, fatty acid metal salts such as zinc stearate, lead stearate, aluminum stearate, calcium stearate, and magnesium stearate, fatty acid amides such as stearamide, oleamide, erucamide, methylenebis(stearamide), and ethylene bis(stearamide), fatty acid esters such as stearic acid monoglyceride, stearyl stearate, and hydrogenated oil, and higher alcohols such as stearyl alcohol. Among these, fatty acids are preferable, and stearic acid is more preferable because they do not easily affect the performance of the negative electrode material, are easy to handle as they are solids at room temperature, disperse uniformly because they melt at the temperature in the step (a), disappear during the process up to the graphitization treatment, and are inexpensive.

When the mixture contains a dispersing agent, the amount thereof is not particularly limited. For example, the content percentage of the dispersing agent with respect to the entire mixture may be 0.1 mass% to 20 mass%, 0.5 mass% to 10 mass%, or 0.5 mass% to 5 mass%.

In order to promote graphitization of the graphitizable aggregate or the binder, the mixture preferably contains a graphitization catalyst. The type of the graphitization catalyst is not particularly limited. Specific examples thereof include substances having graphitization catalytic activity such as silicon, iron, nickel, titanium, and boron, carbides of these substances, oxides of these substances, and nitrides of these substances.

When the mixture contains a graphitization catalyst, the amount thereof is not particularly limited. For example, the content percentage of the graphitization catalyst with respect to the entire mixture may be 0.1 mass% to 50 mass%, 0.5 mass% to 40 mass%, or 0.5 mass% to 30 mass%.

In the step (b), the mixture obtained in the step (a) is molded to obtain a molded product. Preferably, the mixture may be molded into a predetermined shape by uniaxial pressing or the like. If the mixture is molded in this manner, when the mixture is graphitized, the amount of materials packed into the graphitization furnace can increase, the productivity can be improved, and the effect of the graphitization catalyst can be improved.

In the step (b), the method for molding the mixture is not particularly limited. Examples thereof include a mold molding method in which a mixture is placed in a container such as a mold and pressed in a uniaxial direction, a vibration molding method in which a mixture is placed in a container such as a mold, a weight is placed on the top, and the frame is subjected to vibration and impact for molding, and an extrusion molding method in which a mixture is extruded from a nozzle or the like using a horizontal press for molding.

In the step (b), the density of the obtained molded product is not particularly limited, and in consideration of the productivity of the negative electrode material and cycle characteristics of the lithium-ion secondary battery, the density is preferably 0.8 g/cm³ to 1.7 g/cm³, more preferably 1.0 g/cm³ to 1.5 g/cm³, and still more preferably 1.2 g/cm³ to 1.5 g/cm³.

When the fixed carbon content of the graphitizable binder in the mixture with respect to a total amount of 100 mass% of the aggregate and the binder (before graphitization) is preferably 20 mass% or less, more preferably 15 mass% or less, still more preferably 10 mass% or less, and particularly preferably 5 mass% or less. The lower the fixed carbon content of the graphitizable binder in the mixture, the higher the proportion of coke in the mixture, and the higher the tendency for the discharging capacity of the lithium-ion secondary battery to improve.

The lower limit of the fixed carbon content of the graphitizable binder in the mixture is not particularly limited, and may be 0.5 mass% or more or 1.0 mass% or more with respect to a total amount of 100 mass% of the aggregate and the binder (before graphitization).

The molded product obtained in the step (b) is preferably heated before the molded product is graphitized in the step (c). When the heat treatment is performed, organic components in the mixture, which do not contribute to graphitization, are removed, and the generation of gases and the like during the graphitization treatment tends to be minimized.

The heat treatment temperature is not particularly limited, and is preferably a temperature lower than the heat treatment temperature in the step (c). The heat treatment may be performed, for example, in the range of 500°C to 1,000°C.

In the step (c), the molded product obtained in the step (b) is graphitized. The method for graphitizing the molded product is not particularly limited as long as it provides conditions under which the graphitizable components contained in the mixture can be graphitized. For example, a heat treatment method in an atmosphere in which the mixture is not easily oxidized may be used. The atmosphere in which the mixture is not easily oxidized is not particularly limited, and examples thereof include an inert atmosphere such as nitrogen or argon, and a vacuum.

The heat treatment temperature for graphitization may be, for example, 1,500°C or higher, 2,000°C or higher, 2,500°C or higher, or 2,800°C or higher. The upper limit of the heat treatment temperature is not particularly limited, and may be, for example, 3,200°C or lower. When the heat treatment temperature is 1,500°C or higher, crystal changes occur and graphitization tends to progress easily. When the heat treatment temperature is 2,000°C or higher, graphite crystals tend to grow more easily. On the other hand, when heat treatment temperature for graphitization is 3,200°C or lower, sublimation of some graphite tends to be minimized.

In the step (d), the graphitized product obtained in the step (c) is crushed to obtain a crushed product. The crushing method is not particularly limited, and known methods using a jet mill, a vibration mill, a pin mill, a hammer mill and the like can be used. The particle size of the crushed product may be adjusted to a desired size. The particle size adjusting method is not particularly limited, and examples thereof include a method using the above crushing device and a method using a sieve.

As necessary, the crushed product obtained in the step (d) may be subjected to (e) a step of disposing low-crystalline carbon on at least a part of the surface of the crushed product, (f) a step of mixing the crushed product with other negative electrode active materials and the like.

The method for disposing low-crystalline carbon on at least a part of the surface of the crushed product in the step (e) is, for example, a method for mixing a substance (such as a resin) that can become low-crystalline carbon by a heat treatment with the crushed product and performing a heat treatment. When low-crystalline carbon is disposed on at least a part of the surface of the crushed product, input/output characteristics such as rapid charging and discharging characteristics of a lithium-ion secondary battery using this as a negative electrode material may be improved.

### [Other Steps]

The method for producing the negative electrode material of the present disclosure may include steps other than the above steps.

For example, the method for producing the negative electrode material may include a step of attaching an organic compound to the surface of secondary particles after graphitization and performing a heat treatment. When an organic compound is attached to the surface of secondary particles and a heat treatment is performed, the organic compound attached to the surface is converted into low-crystalline carbon. Thereby, a treatment for coating the surface of the graphite particles with low-crystalline carbon can be performed.

The method for attaching an organic compound to the surface of secondary particles is not particularly limited. Examples thereof include a wet method in which secondary particles are dispersed and mixed in a mixed solution in which an organic compound is dissolved or dispersed in a solvent, the solvent is then removed, and attachment is performed; and a dry method in which mechanical energy is applied to a mixture obtained by mixing secondary particles and solid organic compound, and attachment is performed.

The organic compound is not particularly limited as long as it (carbon precursor) is converted into low-crystalline carbon by a heat treatment. Examples thereof include petroleum-based pitch, naphthalene, anthracene, phenanthroline, coal tar, phenolic resins, and polyvinyl alcohol. One type of the organic compounds may be used or two or more types thereof may be used in combination.

The heat treatment temperature at which the secondary particles with the surface to which the organic compound is attached are heated is not particularly limited as long as the organic compound attached to the surface of the secondary particles can be converted into low-crystalline carbon, and is preferably, for example, 400°C to 1,500°C. In order to particularly improve high-temperature resistance, the temperature is more preferably 1,000°C to 1,500°C. The heat treatment is preferably performed, for example, in an inert gas atmosphere such as a nitrogen atmosphere.

The method for mixing the crushed product with other negative electrode active materials in the step (f) is not particularly limited. When the crushed product is mixed with other negative electrode active materials, desired characteristics of the lithium-ion secondary battery can be improved compared to the case where only the crushed product is used as the negative electrode active material. Examples of other negative electrode active materials include, but are not limited to, graphite particles such as natural graphite and artificial graphite, and particles containing elements that can occlude and release lithium ions. Elements that can occlude and release lithium ions are not particularly limited, and examples thereof include Si, Sn, Ge, and In.

The crushed product obtained in the step (f) may contain particles in which a plurality of flat graphite particles are aggregated or bonded together, or may contain particles in which a plurality of flat graphite particles are aggregated or bonded together so that the main surfaces of the graphite particles are non-parallel to each other (hereinafter referred to as graphite secondary particles).

When the crushed product is in the form of graphite secondary particles, the phenomenon in which negative electrode material particles become oriented in the direction of the current collector during pressing for achieving a high density of the negative electrode is inhibited, and paths for lithium ions to enter and exit the negative electrode material tend to be sufficiently secured.

In addition, by including particles in which a plurality of flat graphite particles are aggregated or bonded together, the voids present between the plurality of flat graphite particles mitigate the impact of pressure applied during pressing on individual graphite particles, and the occurrence of destruction and cracks in the graphite particles tends to be minimized. As a result, the lithium-ion secondary battery tends to have excellent resistance to Li precipitation.

In the present disclosure, "flat graphite particles" refers to non-spherical graphite particles with anisotropic shapes. Examples of flat graphite particles include graphite particles having shapes such as a scaly shape, a flake shape, and a partially lumpy shape.

The aspect ratio (expressed as A/B), where A is the length in the major axis direction and B is the length in the minor axis direction, of the flat graphite particles is, for example, preferably 1.2 to 20 and more preferably 1.3 to 10. When the aspect ratio is 1.2 or more, the contact area between particles increases, and the conductivity tends to be further improved. When the aspect ratio is 20 or less, input/output characteristics such as rapid charging and discharging characteristics of the lithium-ion secondary battery tend to be further improved.

Graphite particles are observed under a microscope, 100 graphite particles are arbitrarily selected, the A/B thereof is measured, and the arithmetic mean value of these measured values is defined as the aspect ratio. In observation of the aspect ratio, the length A in the major axis direction and the length B in the minor axis direction are measured as follows. That is, in a projected image of the graphite particle observed using a microscope, two parallel tangent lines (a tangent line a1 and a tangent line a2) circumscribing the periphery of the graphite particle and with the largest distance between them are selected, and the distance between the tangent line a1 and the tangent line a2 is defined as the length A in the major axis direction. Two parallel tangent lines (a tangent line b1 and a tangent line b2) circumscribing the periphery of the graphite particle and with the smallest distance between them are selected, and the distance between the tangent line b1 and the tangent line b2 is defined as the length B in the minor axis direction.

In the present disclosure, the phrase "main surfaces are non-parallel to each other" in the graphite secondary particles means that the surfaces (main surfaces) of the plurality of flat graphite particles with the largest cross-sectional areas are not aligned in a certain direction. Whether the main surfaces of a plurality of flat graphite particles are non-parallel to each other can be confirmed by microscopic observation. Since the plurality of flat graphite particles are aggregated or bonded together with their main surfaces non-parallel to each other, the increase in orientation of the main surfaces of the flat graphite particles in the negative electrode is minimized, expansion of the negative electrode during charging is minimized, and the cycle characteristics of the lithium-ion secondary battery tend to be further improved.

Here, the graphite secondary particles may partially include a structure in which a plurality of flat graphite particles are aggregated or bonded together with their main surfaces parallel to each other.

In consideration of ease of aggregation or bonding, the average particle size of the flat graphite particles is, for example, preferably 1 µm to 50 µm, more preferably 1 µm to 25 µm, and still more preferably 1 µm to 15 µm. Examples of methods for measuring the average particle size of the flat graphite particles include a measurement method using a scanning electron microscope, and the average particle size of the flat graphite particles is, for example, the arithmetic mean value of the particle sizes of 100 flat graphite particles.

### <<Negative Electrode Material Composition for Lithium-ion Secondary Battery>>

A negative electrode material composition for a lithium-ion secondary battery contains the negative electrode material for a lithium-ion secondary battery of the present disclosure, a binder, and a solvent. The negative electrode material composition for a lithium-ion secondary battery of the present disclosure may be in the form of a slurry, which is obtained by kneading the negative electrode material for a lithium-ion secondary battery and a binder together with a solvent.

Kneading can be performed using a dispersing device such as a dispersion mixer or a planetary kneading machine.

The binder used for preparing the negative electrode material composition for a lithium-ion secondary battery is not particularly limited. Examples of binders include styrene-butadiene copolymers (SBR), homopolymers or copolymers of ethylenically unsaturated carboxylic acid esters such as methyl acrylate, methyl methacrylate, ethyl acrylate, ethyl methacrylate, butyl acrylate, butyl methacrylate, hydroxyethyl acrylate, and hydroxyethyl methacrylate and ethylenically unsaturated carboxylic acids such as acrylic acid, methacrylic acid, itaconic acid, fumaric acid, and maleic acid, and polymer compounds with high ion conductivity such as polyvinylidene fluoride, polyethylene oxide, polyepichlorohydrin, polyphosphazene, polyacrylonitrile, and polymethacrylonitrile. When the negative electrode material composition for a lithium-ion secondary battery contains a binder, the content of the binder is not particularly limited. For example, the content of the binder with respect to a total amount of 100 parts by mass of the negative electrode material for a lithium-ion secondary battery and the binder may be 0.5 parts by mass to 20 parts by mass.

The negative electrode material composition for a lithium-ion secondary battery may contain a thickener. As the thickener, carboxymethyl cellulose, methyl cellulose, hydroxymethyl cellulose, ethyl cellulose, polyvinyl alcohol, polyacrylic acid or salts thereof, oxidized starch, phosphorylated starch, casein or the like can be used. When the negative electrode material composition for a lithium-ion secondary battery contains a thickener, the content of the thickener is not particularly limited. For example, the content of the thickener with respect to 100 parts by mass of the negative electrode material for a lithium-ion secondary battery may be 0.1 parts by mass to 5 parts by mass.

The negative electrode material composition for a lithium-ion secondary battery may contain a conductive additive. Examples of conductive additives include carbon materials such as carbon black, graphite, and acetylene black, and inorganic compounds such as conductive oxides and conductive nitrides. When the negative electrode material composition for a lithium-ion secondary battery contains a conductive additive, the content of the conductive additive is not particularly limited. For example, the content of the conductive additive with respect to 100 parts by mass of the negative electrode material for a lithium-ion secondary battery may be 0.5 parts by mass to 15 parts by mass.

### <<Negative Electrode for Lithium-ion Secondary Battery>>

A negative electrode for a lithium-ion secondary battery of the present disclosure includes a negative electrode material layer containing the negative electrode material for a lithium-ion secondary battery of the present disclosure and a current collector. The negative electrode for a lithium-ion secondary battery may contain, in addition to the negative electrode material layer containing the negative electrode material for a lithium-ion secondary battery of the present disclosure and the current collector, other constituent elements as necessary.

The negative electrode for a lithium-ion secondary battery can be produced, for example, by preparing the negative electrode material composition for a lithium-ion secondary battery of the present disclosure, applying it onto a current collector to form a negative electrode material layer, molding the negative electrode material composition for a lithium-ion secondary battery into a shape such as a sheet shape or a pellet shape, and integrating it with the current collector.

The material of the current collector is not particularly limited, and can be selected from among aluminum, copper, nickel, titanium, stainless steel and the like. The form of the current collector is not particularly limited, and can be selected from among a foil, a perforated foil, a mesh and the like. In addition, a porous material such as a porous metal (foamed metal) or carbon paper can also be used as the current collector.

When the negative electrode material composition for a lithium-ion secondary battery is applied onto the current collector to form a negative electrode material layer, the method is not particularly limited, and known methods such as a metal mask printing method, an electrostatic coating method, a dip coating method, a spray coating method, a roll coating method, a doctor blade method, a comma coating method, a gravure coating method, and a screen printing method can be used. After the negative electrode material composition for a lithium-ion secondary battery is applied onto the current collector, the solvent contained in the negative electrode material composition for a lithium-ion secondary battery is removed by drying. Drying can be performed using, for example, a hot air dryer, an infrared dryer or a combination of these devices. As necessary, the negative electrode material layer may be subjected to a rolling treatment. The rolling treatment can be performed by a method using a flat press or a calender roll.

When the negative electrode material composition for a lithium-ion secondary battery, which is molded into a sheet shape, a pellet shape or the like, is integrated with the current collector to form a negative electrode material layer, the integration method is not particularly limited. For example, the integration can be performed using a roller, a flat press or a combination of these devices. The pressure for integrating the negative electrode material composition for a lithium-ion secondary battery with the current collector is preferably, for example, about 1 MPa to 200 MPa.

The negative electrode density of the negative electrode material layer is not particularly limited, and is, for example, preferably 1.1 g/cm³ to 1.8 g/cm³, more preferably 1.1 g/cm³ to 1.7 g/cm³, and still more preferably 1.1 g/cm³ to 1.6 g/cm³. When the negative electrode density is 1.1 g/cm³ or more, an increase in the electric resistance is minimized and the capacity tends to increase, and when the negative electrode density is 1.8 g/cm³ or less, a deterioration in input characteristics and cycle characteristics tends to be reduced.

### <<Lithium-ion Secondary Battery>>

A lithium-ion secondary battery of the present disclosure includes the negative electrode for a lithium-ion secondary battery of the present disclosure, a positive electrode, and an electrolytic solution.

Similarly to the above method for producing the negative electrode, the positive electrode can be obtained by forming a positive electrode material layer on a current collector. As the current collector, a foil, perforated foil, mesh, or the like, made of a metal or an alloy, such as aluminum, titanium, or stainless steel can be used.

The positive electrode material used to form the positive electrode material layer is not particularly limited. Examples of positive electrode materials include metal compounds (metal oxide, metal sulfide, etc.) that can dope or intercalate lithium ions, and conductive polymer materials. More specific examples thereof include metal compounds such as lithium cobalt oxide (LiCoO₂), lithium nickel oxide (LiNiO₂), lithium manganese oxide (LiMnO₂), complex oxides thereof (LiNiₓMn_{y}Co_{z}O₂, x+y+z=1), complex oxides containing additive element M' (LiNiₐMn_{b}Co_{c}M'_{d}O₂, a+b+c+d=1, M':Al, Mg, Ti, Zr or Ge), spinel type lithium manganese oxide (LiMn₂O₄), lithium vanadium compounds, V₂O₅, V₆O₁₃, VO₂, MnO₂, TiO₂, MoV₂O₈, TiS₂, V₂S₅, VS₂, MoS₂, MoS₃, Cr₃O₈, Cr₂O₅, and olivine type LiMPO₄(M: Co, Ni, Mn, Fe), conductive polymers such as polyacetylene, polyaniline, polypyrrole, polythiophene, and polyacene, and porous carbon. One type of the positive electrode materials may be used or two or more types thereof may be used.

The electrolytic solution is not particularly limited, and for example, a solution in which a lithium salt as an electrolyte is dissolved in a non-aqueous solvent (so-called organic electrolytic solution) can be used.

Examples of lithium salts include LiClO₄, LiPF₆, LiAsF₆, LiBF₄, and LiSO₃CF₃. One type of the lithium salts may be used or two or more types thereof may be used.

Examples of non-aqueous solvents include ethylene carbonate, fluoroethylene carbonate, chloroethylene carbonate, propylene carbonate, butylene carbonate, vinylene carbonate, cyclopentanone, cyclohexylbenzene, sulfolane, propane sultone, 3-methylsulfolane, 2,4-dimethylsulfolane, 3-methyl-1,3-oxazolidin-2-one, γ-butyrolactone, dimethyl carbonate, diethyl carbonate, ethyl methyl carbonate, methyl propyl carbonate, butyl methyl carbonate, ethyl propyl carbonate, butyl ethyl carbonate, dipropyl carbonate, 1,2-dimethoxyethane, tetrahydrofuran, 2-methyltetrahydrofuran, 1,3-dioxolane, methyl acetate, ethyl acetate, trimethyl phosphate, and triethyl phosphate. One type of the non-aqueous solvents may be used or two or more types thereof may be used.

The form of the positive electrode and the negative electrode in the lithium-ion secondary battery is not particularly limited. For example, the positive electrode and the negative electrode, and as necessary, a separator disposed between the positive electrode and the negative electrode, may be wound in a spiral shape or these are laminated in a flat shape.

The separator is not particularly limited, and for example, a resin nonwoven fabric, a cloth, a microporous film or a combination thereof can be used. Examples of resins include those mainly composed of polyolefins such as polyethylene and polypropylene. When the positive electrode and the negative electrode do not come into contact with each other due to the structure of the lithium-ion secondary battery, the separator may not be used.

The shape of the lithium-ion secondary battery is not particularly limited. Examples thereof include laminate-type batteries, paper-type batteries, button-type batteries, coin-type batteries, laminate-type batteries, cylindrical-type batteries and prismatic-type batteries.

The lithium-ion secondary battery of the present disclosure is suitable as a large-capacity lithium-ion secondary battery for use in electric vehicles, power tools, power storage devices and the like.

### [Examples]

The present disclosure will be described below in more detail with reference to Examples, but the present disclosure is not limited to these Examples.

### [Example 1]

As a raw material for graphite particles, petroleum-derived green coke (semi-needle coke) was used.

The green coke was crushed with a hammer mill. The crushed material was sieved using a sieve with a 3 mm mesh opening, the undersize material was sieved using a sieve with a 1 mm mesh opening, and granules with a particle size of 1 mm to 3 mm were collected.

The obtained coke particles were crushed and classified using a roller mill. Next, the coke particles were subjected to a spheronization treatment under conditions of a peripheral speed of 75 m/s for 50 minutes. Accordingly, coke particles shown in Table 1 were obtained. Then, using a laser diffraction particle size distribution measurement device (SALD3100, commercially available from Shimadzu Corporation), the volume-based particle size distribution of the coke particles was determined. The results are shown in Table 1.

65 parts by mass of the obtained coke particles (fixed carbon 90 mass%), 7 parts by mass of starch (fixed carbon 20 mass%), and 28 parts by mass of water were kneaded using a kneader to obtain a mixture.

Next, the obtained mixture was molded at room temperature by uniaxial pressing to a density of 1.3 g/cm³ or less to obtain a molded product. Next, the obtained molded product was heated in a nitrogen atmosphere at 850°C for 8 hours. Then, the product was graphitized at 3,000°C for 30 hours. Then, the obtained particles were sieved through a 280-mesh screen to obtain graphite particles as the negative electrode material. Using a laser diffraction particle size distribution measurement device (SALD3100, commercially available from Shimadzu Corporation), the volume-based particle size distribution of the graphite particles was determined, and the D10 was 16.0 µm, the D50 was 23.6 µm, and the D90 was 34.7 µm.

### [Examples 2 and 3]

Coke particles were obtained in the same manner as in Example 1 except that the spheronization treatment time for the coke particles was changed to 35 minutes or 15 minutes. The volume-based particle size distribution of the coke particles was determined in the same manner as in Example 1. The results are shown in Table 1.

In addition, graphite particles as the negative electrode material were obtained in the same manner as in Example 1. The volume-based particle size distribution of the graphite particles was determined in the same manner as in Example 1. The results are shown in Table 2.

### [Comparative Example 1]

Coke particles were obtained in the same manner as in Example 1 except that the coke particles were not subjected to a spheronization treatment. The volume-based particle size distribution of the coke particles was determined in the same manner as in Example 1. The results are shown in Table 1.

In addition, graphite particles as the negative electrode material were obtained in the same manner as in Example 1. The volume-based particle size distribution of the graphite particles was determined in the same manner as in Example 1. The results are shown in Table 2.

The coke particles and negative electrode materials obtained in Examples and Comparative Examples were used to measure and evaluate physical properties shown below. The results are shown in Table 1 and Table 2.

### (Particle Size Distribution)

The volume-based particle size distribution of the coke or graphite particles was determined using a laser diffraction particle size distribution measurement device (SALD3100, commercially available from Shimadzu Corporation). Specifically, D10, D50, D90 and D90/D10 were determined.

### (Circularity)

The circularity of the coke or negative electrode material was measured using a wet-flow type particle size and shape analyzing device (FPIA-3000, commercially available from Malvern Instruments Ltd.). The circularity at a cumulative 50% on a number basis (so-called average circularity) was defined as the circularity.

### (Specific Surface Area)

A sample obtained by filling a measurement cell with coke or a negative electrode material and performing a heat pretreatment at 200°C under vacuum degassing was subjected to nitrogen gas adsorption using a gas adsorption device (ASAP2010, commercially available from Shimadzu Corporation). The obtained sample was subjected to BET analysis using a five-point method to determine the specific surface area (SSA in the table).

### (Tap Density)

100 cm³ of the coke or negative electrode material sample powder was put into a graduated, flat-bottomed test tube with a capacity of 150 cm³ (KRS-406, commercially available from Kuramochi Scientific Instruments Co., Ltd.), and the graduated, flat-bottomed test tube was capped. The 0-tap density (TAP0) was determined from the mass and volume of the sample powder before dropping the capped graduated, flat-bottomed test tube. In addition, the 30-tap density (TAP30) and the 250-tap density (TAP250) were determined from the mass and volume of the sample powder after dropping the graduated, flat-bottomed test tube 30 times and 250 times from a height of 5 cm.

### (Compression Rate)

The compression rate was determined from the TAP0 and TAP250 described above according to the following formula. $Compression rate = \left(TAP250-TAP0\right) / TAP 250$

### (Compression Load)

A mold with a diameter of 15 mm was filled with 3.0 g of the negative electrode material and compressed at a constant speed of 10 mm/min using an autograph (commercially available from Shimadzu Corporation). During the compression, the distance from the bottom surface of the negative electrode material to the pressing surface was measured, and the density under press was calculated from the volume of the negative electrode material obtained by multiplying the measured distance by the bottom area of the mold. A press hammer of the autograph was attached with a load cell, and the applied force (kN/cm²) at which a predetermined density of 1.7 g/cm³ was reached was defined as the compression load.

### (Springback Percentage)

The reference density during pressing by the above method using an Autograph (commercially available from Shimadzu Corporation) was 1.7 g/cm³, and the springback percentage was determined according to the following formula. 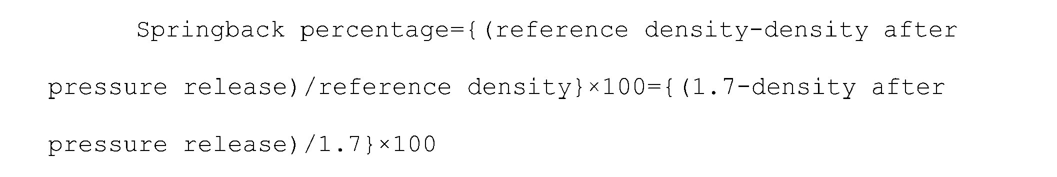 Springback percentage={(reference density-density after pressure release)/reference density}×100={(1.7-density after pressure release)/1.7}×100

### (Oil Absorption)

The oil absorption of the coke or negative electrode material was measured according to the method described in JIS K 6217-4:2017 "Carbon black for rubber-Fundamental characteristics-Part 4:Method of determining oil absorption number" using linseed oil (for example, commercially available from Kanto Chemical Co., Inc.) in place of dibutyl phthalate (DBP) as a reagent liquid.

Specifically, linseed oil was titrated into target powder using a constant speed burette, and the change in viscosity characteristics was measured using a torque detector. The amount of linseed oil added per unit mass of the target powder that corresponded to 70% of the generated maximum torque (values shown in Table 1 or Table 2) was defined as the oil absorption (mL/100 g). As the measuring instrument, an absorption measurement device (product name: S-500, commercially available from AsahiSouken Corporation) was used.

### (Degree of Graphitization)

The negative electrode material was mixed with 10 parts by mass or 20 parts by mass of silicon powder (for example, National Institute of Standards and Technology NIST, SRM640f) in an agate mortar for 5 minutes, and the obtained mixture was placed in a sample holder for X-ray diffraction measurement. Using an X-ray diffraction measurement device (for example, X-ray diffraction measurement device: X-RAY DIFFRACTIOMETER MultiFlex, commercially available from Rigaku Corporation), according to X-ray diffraction measurement (2 θ=25° to 29°) using CuKα radiation, a diffraction angle corresponding to the (002) plane of graphite and a diffraction angle corresponding to the (111) plane of silicon were measured.

The theoretical diffraction angle (2 θ=28.441°) of Si was used to correct the determined diffraction angles of silicon and graphite, and thereby a correct diffraction angle of graphite was determined.

The interplanar spacing (Å) of the d(002) plane of the negative electrode material was calculated using the Bragg's equation (2dsinθ=nλ), and the degree of graphitization was calculated by the following formula. 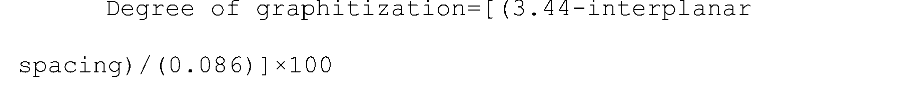 Degree of graphitization=[(3.44-interplanar spacing)/(0.086)]×100

### (Crystallite Size)

In the same manner as described above, using an X-ray diffraction measurement device (for example, X-ray diffraction measurement device: X-RAY DIFFRACTIOMETER MultiFlex, commercially available from Rigaku Corporation), X-ray diffraction measurement (75,5° to 78.5°) using CuKα radiation was performed. The obtained diffraction line corresponding to the (110) plane of graphite and the obtained diffraction line corresponding to the (331) plane of silicon were subjected to peak fitting and separated into Kα1 and Kα2 diffraction lines. Then, the half-width of the Kα1 diffraction line of graphite was corrected using the half-width of the Kα1 diffraction line of silicon, and the crystallite size Lc (nm) was then determined by the Scherrer's equation (crystallite size=K·λ/β·cosθ).
K: shape factor (generally 0.9)
λ: X-ray wavelength
β: peak half-width (units of radians)
θ: peak diffraction angle (units of radians)

### (Average Interplanar Spacing)

The negative electrode material was mixed with 10 parts by mass or 20 parts by mass of silicon powder (for example, National Institute of Standards and Technology NIST, SRM640f) in an agate mortar for 5 minutes, and the obtained mixture was placed in a sample holder for X-ray diffraction measurement. Using an X-ray diffraction measurement device (for example, X-ray diffraction measurement device: X-RAY DIFFRACTIOMETER MultiFlex, commercially available from Rigaku Corporation), according to X-ray diffraction measurement (2 θ=25° to 29°) using CuKα radiation, a diffraction angle corresponding to the (002) plane of graphite and a diffraction angle corresponding to the (111) plane of silicon were measured.

The theoretical diffraction angle (2 θ=28.441°) of Si was used to correct the determined diffraction angles of silicon and graphite, and thereby a correct diffraction angle of graphite was determined.

Measurement was performed under the following conditions, and the average interplanar spacing (d₀₀₂) of the negative electrode material was calculated using the Bragg's equation.
radiation source: CuKα radiation (wavelength=0.15418 nm)
output: 40 kV, 20 mA
sampling interval: 0.010°
scanning range: 10° to 35°
scan speed: 0.5°/min
   Bragg's equation: $2 dsin θ = n λ ;$

Here, d is the length of one period, θ is the diffraction angle, n is the order of reflection, and λ is the X-ray wavelength.

### (Electrode Orientation)

A negative electrode for a lithium-ion secondary battery was produced as follows, and the electrode orientation was evaluated under the following conditions.

### -Production of Negative Electrode for Lithium-ion Secondary Battery-

Graphite particles (97.6 parts by mass), carboxymethyl cellulose (CMC) (1.2 parts by mass) and styrene butadiene rubber (SBR) (1.2 parts by mass) were kneaded to prepare a negative electrode material composition. This negative electrode material composition was applied to the glossy surface of an electrolytic copper foil so that the coating amount was 10 mg/cm², and pre-dried at 90°C for 2 hours, and the electrode density was then adjusted using a roll press to the value shown in Table 3. Then, under a vacuum atmosphere, a curing treatment was performed by drying at 120°C for 4 hours, and a negative electrode material layer was formed on the electrolytic copper foil to obtain a negative electrode for a lithium-ion secondary battery.

### -Evaluation of Electrode Orientation-

The obtained negative electrode for a lithium-ion secondary battery was molded into a strip-shaped sheet with a width of 5 cm and an area of 600 cm², and the obtained molded product was pressed using a roll-type press machine at a hydraulic pressure of 4 t. In this case, the line pressure was 4 t/5 cm=0.8 t/cm. The pressed negative electrode was placed in a cell for X-ray diffraction measurement, and using an X-ray diffraction measurement device (X-ray diffraction measurement device X-RAY DIFFRACTIOMETER MultiFlex, commercially available from Rigaku Corporation), under conditions of a scanning speed of 0.25°/min, a tube voltage of 40 kV, a tube current of 30 mA, a divergence slit of 1°, a scattering slit of 1°, and a receiving slit of 0.3 mm, an X-ray diffraction pattern was measured using CuKα radiation (2 θ=25.5° to 27.5°, 76.5° to 78.5°). The ratio I₀₀₂/I₁₁₀ (002/110 in Table 3) of the obtained peak intensity (I₀₀₂) of the 002 diffraction line to the peak intensity (I₁₁₀) of the 110 diffraction line was determined and this value was defined as the electrode orientation.

### (Adhesion Evaluation)

The obtained negative electrode material was used to produce a negative electrode material composition, the negative electrode material composition was applied to a rolled copper foil to form a negative electrode material layer, and the adhesion between the rolled copper foil and the negative electrode material layer was evaluated. The obtained negative electrode material was used to prepare a negative electrode material composition in the same method as described above. Next, the negative electrode material composition was applied to a rolled copper foil with a thickness of 20 µm using a comma coater with the clearance adjusted so that the coating amount per unit area was 35.0 mg/cm² to form a negative electrode material layer. The rolled copper foil with the negative electrode material layer formed thereon was punched out to a size of 1.0 cm×5.0 cm to obtain a copper foil with a negative electrode material layer for adhesion evaluation.

Next, a double-sided tape G9000 (commercially available from Dexerials Corporation) was attached to a horizontally movable base, and the copper foil side of the copper foil with a negative electrode material layer was then attached to the side of the double-sided tape opposite to the side attached to the base. Then, an adhesive tape (commercially available from 3M) (a width of 18 mm) was attached to the negative electrode material layer side of the copper foil with a negative electrode material layer so that the end of the adhesive tape was exposed, and thereby a sample for evaluating peeling of the negative electrode material layer was prepared.

For the prepared sample for evaluating peeling of the negative electrode material layer, the exposed end of the adhesive tape was grasped with a peel strength device (push-pull scale & digital force gauge, commercially available from Imada Co., Ltd.), and while moving the base horizontally at a speed of 20 mm/min, the end of the adhesive tape was pulled upward at a speed of 20 mm/min to peel off the negative electrode material layer attached to the adhesive tape and the copper foil attached to the double-sided tape, and the peel strength of the negative electrode material layer at this time was measured.

### (SOC-Li (Resistance to Li Precipitation))

The negative electrode for a lithium-ion secondary battery obtained above was used to produce a lithium-ion secondary battery and the resistance to Li precipitation was evaluated as follows.

### -Production of Lithium-ion Secondary Battery-

The negative electrode for a lithium-ion secondary battery obtained above, metallic lithium as a counter electrode, a mixed solution of ethylene carbonate/ethyl methyl carbonate (3:7 volume ratio) and vinylene carbonate (VC) (1.0 mass%), and containing 1 M LiPF₆ as an electrolytic solution, a polyethylene microporous membrane with a thickness of 25 µm as a separator, and a copper plate with a thickness of 250 µm as a spacer were used to produce a coin cell as a lithium-ion secondary battery.

### -Evaluation of Resistance to Li Precipitation-

The produced lithium-ion secondary battery was placed in a thermostatic chamber set at 25°C, and subjected to constant current charging at a current value of 0.1C up to a voltage of 0.005 V (V vs. Li/Li⁺) from the first to third cycles, and then subjected to constant voltage charging at 0.005 V until the current value reached 0.05C. Next, after a 30-minute rest, the battery was subjected to constant current discharging at a current value of 0.2C up to a voltage of 1.5 V (V vs. Li/Li⁺). The discharging capacity at the third cycle was designated as 1C in the Li precipitation test. At the fourth cycle, charging was performed at a current density of 3C, corresponding to charging the discharging capacity at the third cycle within 20 minutes, and the cutoff condition was set to a 1C capacity limit. In the differential profile (dV/dQ, V is the voltage, and Q is the electrical capacity) of the obtained fourth cycle charging curve, the first inflection point was taken as the Li precipitation start point, the capacity at this time was expressed as a percentage relative to the discharging capacity at the third cycle (or the charging capacity at the fourth cycle set to the same value), and the resistance to Li precipitation was evaluated. The results are shown in Table 3. The higher the percentage value, the better the resistance to Li precipitation.

### (Measurement of DC Resistance (DCR))

The DC resistance (DCR) of the lithium-ion secondary battery was measured, and input characteristics of the battery were determined. Details are as follows.

The negative electrode for a lithium-ion secondary battery obtained above, a mixture electrode containing 94 parts by mass of lithium nickel cobalt manganese oxide (LiNi_{0.33}Mn_{0.33}Co_{0.33}O₂), 3 parts by mass of carbon black, and 3 parts by mass of polyvinylidene fluoride as a positive electrode, a mixed solution of ethylene carbonate/diethyl carbonate (3:7 volume ratio) and vinylene carbonate (VC)(1.0 mass%) and containing 1 M LiPF₆ as an electrolytic solution, and a polyethylene microporous membrane with a thickness of 25 µm as a separator were used to produce a single-layer laminated full cell (lithium-ion secondary battery).

The lithium-ion secondary battery (single-layer laminated full cell) was placed in a thermostatic chamber set at 25°C and subjected to three charging and discharging cycles under the following conditions:
charging: CC/CV 0.2C 4.2 V 0.02C Cut, and discharging: CC 0.2C 2.5 V Cut.

Next, constant current charging was performed at a current value of 0.2C up to an SOC of 50%.

In addition, the lithium-ion secondary battery was placed in a thermostatic chamber set at 25°C, and subjected to constant current charging under conditions of 1C, 2C, and 3C each for 10 seconds, and the voltage drop (ΔV) at each constant current was measured, and the DC resistance (DCR) was measured using the following formula. 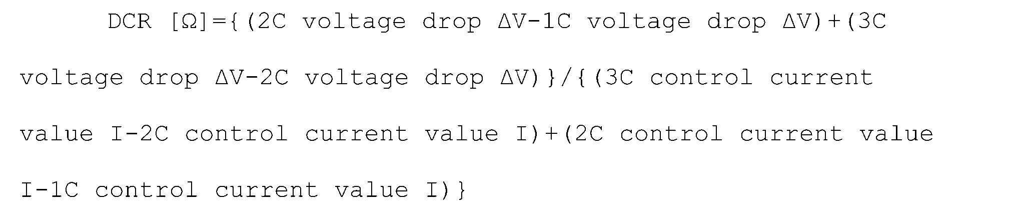 DCR [Ω]={(2C voltage drop ΔV-1C voltage drop ΔV)+(3C voltage drop ΔV-2C voltage drop ΔV)}/{(3C control current value I-2C control current value I)+(2C control current value I-1C control current value I)}

### (Void Analysis)

The graphite particles contained in the negative electrode material was subjected to void analysis as follows. First, the cross section of the particles was processed using a cross section polisher (commercially available from JEOL Ltd.) under conditions of room temperature, 8 kV, and 6 h. The obtained SEM image was binarized into void parts and regions other than the void part, and the void parts were set to 0 (black), and the regions (solid parts) other than the void parts were set to 1 (white). From the binarized images, 8 graphite particle images having 10,000 pixels or more were selected, and in the selected graphite particle images, the average value (void content) of the 0/1 distributions was determined from the distributions of 0 and 1 for each pixel in the X-axis direction. The arithmetic mean value of the void contents obtained from the 8 graphite particle images is shown in Table 4 as the average void content value. The larger the average void content value, the higher the proportion of the solid parts.

In addition, for the 8 selected graphite particle images, the number of pixels corresponding to the void parts and the number of pixels corresponding to the solid parts were determined. The average value of the numbers of pixels corresponding to the void parts is shown in Table 4.

Next, for one selected graphite particle image, the number of pixels corresponding to the void parts and the number of pixels corresponding to the solid parts were determined. Then, the proportion of the number of pixels corresponding to the void parts with respect to a total number of pixels corresponding to the void parts and pixels corresponding to the solid parts (the number of pixels of the void parts/[the number of pixels of the void parts+the number of pixels of the solid parts], also referred to as the proportion of the number of pixels of the void parts) was determined. For the remaining 7 selected graphite particle images, the proportion of the number of pixels of the void parts was determined and the arithmetic mean value thereof is shown in Table 4 as the average value of the proportions of the number of pixels of the void parts.

In addition, the total number of pixels for the 8 selected graphite particle images is shown in Table 4.

### (Hue Analysis)

The negative electrode material of Example 1 or Comparative Example 1 was used to prepare a measurement sample used for hue analysis. Specifically, 3.7 g of the negative electrode material obtained as described above, 7.0 g of an epoxy resin (bisphenol A type epoxy resin), and 1.6 g of a curing agent (modified aliphatic polyamine-based curing agent) were put into a container and mixed. The obtained mixture was polished using a polishing device (product name: MetaServ 250). As abrasives, #600 waterproof abrasive paper, diamond with a particle size of 6 µm, diamond with a particle size of 1 µm and alumina were used in that order. Through the above treatment, a polished measurement sample was prepared.

The polished measurement sample was measured using a 2D birefringence measurement system (WPA-micro, commercially available from Photonic Lattice, Inc.). The measurement conditions were high-speed measurement accuracy, single wavelength measurement, and a wavelength of 543 nm. The obtained measurement images were analyzed with a principal axis color display of 180° and an axis orientation of the fast axis. A color image of the principal axis orientation was obtained from the 2D birefringence image, and using JMP (commercially available from SAS), RGB (red, green, blue) and HLS (hue, luminance, saturation) data were extracted for each pixel, and the graphite particles were identified. When the RGB coordinate space was converted into the HSL coordinate space, a double-cone model was used. Hue (H) data of a single graphite particle was plotted, and the standard deviation and variance of the hues of the graphite particles were determined. The standard deviation and variance of hues of a total of 10 graphite particles were determined and the arithmetic mean values thereof are shown as the average value of the standard deviations of the hues of the graphite particles and the average value of the variances thereof in Table 4.

A stacked laminated cell for expansion measurement was produced under the following conditions.

A negative electrode composition containing graphite/conductive additive (carbon black)/CMC/SBR=96.0/1.0/1.5/1.5 (mass ratio) was applied at an amount of 10.0 mg/cm², and the electrode density was 1.60 g/cm³. A positive electrode composition containing NMC811/conductive additive (carbon black)/PVdF=96.5/1.5/2.0 (mass ratio) was applied at an amount of 14.1 mg/cm², and the electrode density was 3.2 g/cm³. A single PP layer was used as a separator, and an electrolytic solution containing 1 mol/L LiPF₆, EC (ethyl carbonate)/DEC (diethyl carbonate)(=3/7) and VC (vinylene carbonate) (1.0 mass%) was used. The capacity balance of the positive and negative electrodes was designed to be 1.07 to 1.13, and a cell was produced by alternately laminating five negative electrodes (double-sided coating) and four positive electrodes (double-sided coating), with an amount of 2,100 µL of an electrolytic solution.

The produced laminated cell was pre-charged (45°C, CC=0.03C, CV=3.4 V, 0.01C cut off→degassing 1), and then subjected to an aging treatment (1st charge: 45°C CC=0.1C, CV=4.2 V, 0.02C cut off 12 h hold→degassing 2, 1st discharge: 25°C CC=0.1C, EV=2.8 V, 2nd charge: 25°C CC=0.2C, CV=4.2 V, 0.05C cut off, 2nd discharge: 25°C CC=0.2C, EV=2.8 V 2cy), and the expansion was then measured.

For expansion measurement, a displacement meter LG100-0125 (commercially available from Mitutoyo Corporation) was used, a displacement sampling interval was 10 sec, a weight was placed on the laminated cell to apply a load: about 0.07 kg/cm², and the measurement was then performed.

The charging and discharging conditions for expansion measurement were 0.2C CC 2.5 V discharge→15-min rest→0.2C CC 4.25 V charge→15-min rest→0.2C CC 2.5 V discharge→15-min rest.

### (SOC-induced Swelling)

This was calculated by dividing the value obtained by subtracting the displacement at the discharged state @2.5 V from the displacement at the charged state @4.25 V at the 20th cycle or 70th cycle by the assumed effective mixture layer thickness (the total thickness of only the negative electrode layer facing the positive electrode).

### (Deterioration-induced Swelling)

This was calculated by dividing the displacement at the discharged state @2.5 V at the 20th cycle or 70th cycle by the assumed effective mixture layer thickness (the total thickness of only the negative electrode layer facing the positive electrode).

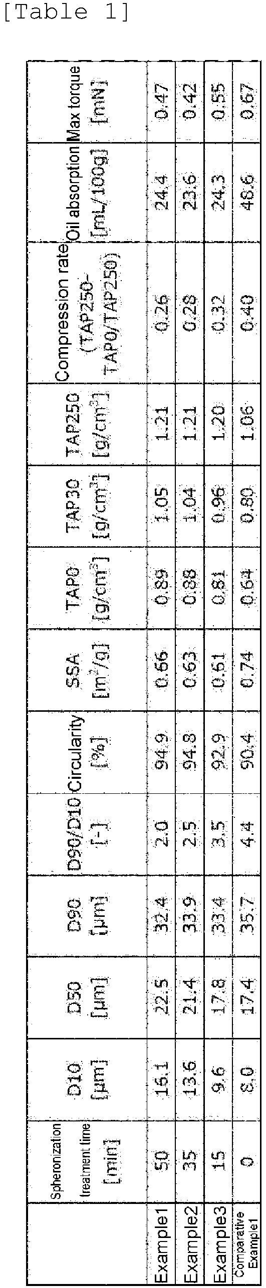

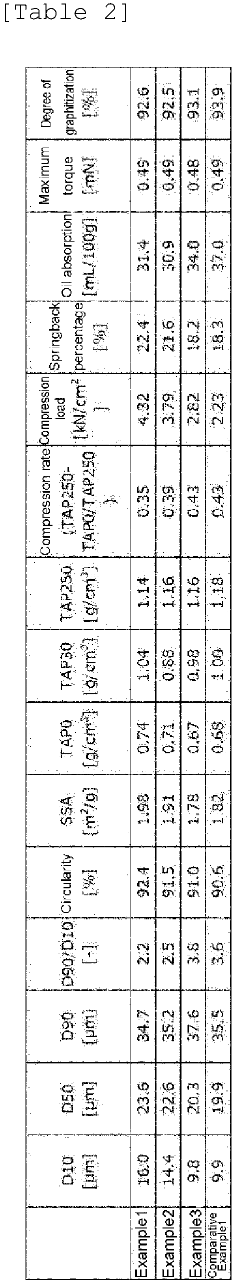

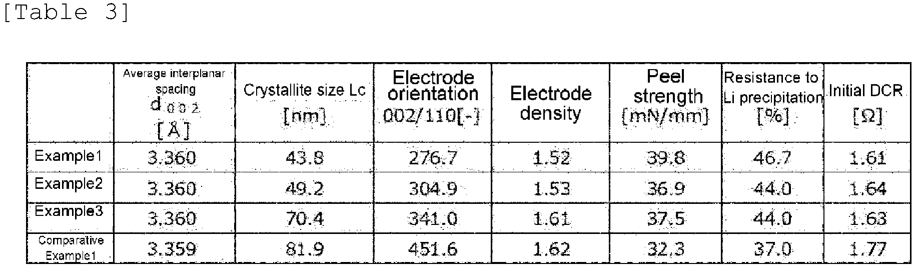

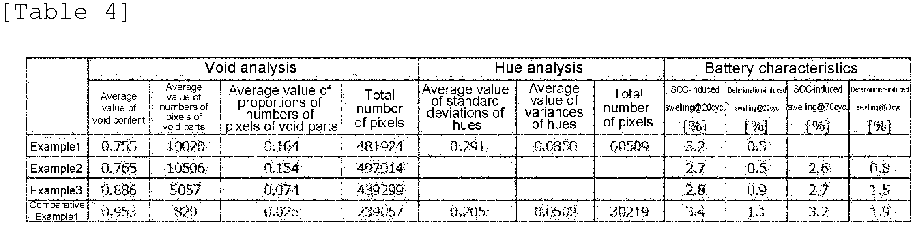

As shown in Table 4, in Examples 1 to 3, the average void content value was in the range of 0.700 to 0.940, and the SOC-induced swelling and the deterioration-induced swelling were minimized compared to Comparative Example 1.

In addition, as shown in Table 3, in Examples, lithium-ion secondary batteries having excellent input/output characteristics and excellent adhesion between a negative electrode and a current collector were produced.

In addition, in Examples, the resistance to Li precipitation was better compared to Comparative Example 1.

Priority is claimed on PCT/JP2023/046456, PCT/JP2023/046457, PCT/JP2023/046458, PCT/JP2023/046459, PCT/JP2023/046460 and PCT/JP2023/046461, filed December 25, 2023, the contents of which are incorporated herein by reference.

All references, patent applications, and technical standards described in this specification are incorporated herein by reference to the same extent as if it were specifically and individually noted that the individual references, patent applications, and technical standards are incorporated by reference.

## Claims

1. A negative electrode material for a lithium-ion secondary battery, comprising a plurality of graphite particles,
wherein, when an SEM image of a cross section of the graphite particles is binarized into void parts and regions other than the void parts, with the void parts set to 0, and the regions other than the voids set to 1, and a plurality of graphite particle images having 10,000 pixels or more are selected from the binarized images, in the selected graphite particle images, the average void content value is 0.700 to 0.940.

2. The negative electrode material for a lithium-ion secondary battery according to claim 1, wherein, when a plurality of graphite particle images having 10,000 pixels or more are selected from the binarized images, and in the selected graphite particle images, the number of pixels corresponding to the void parts and the number of pixels corresponding to regions other than the void parts are determined, the total number of pixels in the selected graphite particle images is 100,000 or more, and the average value of the numbers of pixels corresponding to the void parts contained in one graphite particle image is 1,000 to 20,000.

3. The negative electrode material for a lithium-ion secondary battery according to claim 1 or 2, wherein, when a plurality of graphite particle images having 10,000 pixels or more are selected from the binarized images, and in the selected graphite particle images, the number of pixels corresponding to the void parts and the number of pixels corresponding to regions other than the void parts are determined, the total number of pixels in the selected graphite particle images is 100,000 or more, and the average value of the proportions of the number of pixels corresponding to the void parts included in one graphite particle image with respect to the sum of the number of pixels corresponding to the void parts and the number of pixels corresponding to the regions other than the void parts included in the one graphite particle image is 0.030 to 0.300.

4. The negative electrode material for a lithium-ion secondary battery according to any one of claims 1 to 3, wherein, regarding the standard deviation and variance of hues of the graphite particles obtained from a birefringence image of the cross section of the graphite particles, when the total number of pixels in the birefringence image is 10,000 or more, the average value of the standard deviations of the hues of the graphite particles is 0.210 to 0.400, and the average value of the variances of the hues of the graphite particles is 0.0550 to 0.1000.

5. The negative electrode material for a lithium-ion secondary battery according to any one of claims 1 to 4, wherein the true density of the graphite particles is 2.20 g/cm³ or less.

6. The negative electrode material for a lithium-ion secondary battery according to any one of claims 1 to 5, wherein the graphite particles include artificial graphite particles, the artificial graphite particles are particles obtained by graphitizing a mixture containing a graphitizable aggregate and a graphitizable binder, and the binder contains a water-soluble or water-absorbent polymer compound.

7. The negative electrode material for a lithium-ion secondary battery according to any one of claims 1 to 6, wherein the circularity of the graphite particles is 91.0% or more.

8. The negative electrode material for a lithium-ion secondary battery according to any one of claims 1 to 7, wherein the oil absorption of the graphite particles is 35 mL/100 g or less.

9. The negative electrode material for a lithium-ion secondary battery according to any one of claims 1 to 8, wherein the degree of graphitization of the graphite particles is 93.5% or less.

10. The negative electrode material for a lithium-ion secondary battery according to any one of claims 1 to 9, wherein the compression load on the graphite particles is 2.50 kN/cm² or more.

11. A negative electrode for a lithium-ion secondary battery, comprising a negative electrode material layer containing the negative electrode material for a lithium-ion secondary battery according to any one of claims 1 to 10 and a current collector.

12. A lithium-ion secondary battery, comprising the negative electrode for a lithium-ion secondary battery according to claim 11, a positive electrode, and an electrolytic solution.

13. A method for producing a negative electrode material for a lithium-ion secondary battery for producing the negative electrode material for a lithium-ion secondary battery according to any one of claims 1 to 10, comprising:
(a) a step of obtaining a mixture containing a graphitizable aggregate and a graphitizable binder containing a water-soluble or water-absorbent polymer compound,
(b) a step of molding the mixture to obtain a molded product,
(c) a step of graphitizing the molded product to obtain a graphitized product, and
(d) a step of crushing the graphitized product to obtain a crushed product.

14. The method for producing the negative electrode material for a lithium-ion secondary battery according to claim 13, further comprising a step of spheroidizing a graphitizable aggregate before the step (a).
